# EUROPÄISCHE PATENTANMELDUNG

(11) **EP 4 417 093 A1**
(43) Veröffentlichungstag der Anmeldung: **21.08.2024**
(21) Anmeldenummer: 24152003.0
(22) Anmeldetag: 16.01.2024
(51) Int. Cl.: A47J 31/60

(54) **VERFAHREN ZUR ÜBERWACHUNG EINER ENTKALKUNGSROUTINE BEI EINEM KAFFEEAUTOMATEN**

(30) Priorität: 16.02.2023 DE 102023201353
(71) Anmelder: BSH Hausgeräte GmbH, 81739 München (DE)
(72) Erfinder: Botros, Peter, 83301 Traunreut (DE); Schattkowski, Luka, 83224 Grassau (DE); Daburger, Josef, 83313 Siegsdorf (DE)

(57) **Zusammenfassung**

Die Erfindung betrifft ein Verfahren zur Überwachung einer Entkalkungsroutine bei einem Kaffeeautomaten (1), bei dem,
- eine routinemäßige Entkalkung durchgeführt wird,
- zusätzlich für eine ordnungsgemäße Entkalkung relevante Parameter von einer Erfassungseinrichtung (8) erfasst und an eine Auswerte-/Steuereinrichtung (9) übermittelt werden,
- die Auswerte-/Steuereinrichtung (9) einen Nutzer des Kaffeeautomaten (1) zu einer zusätzlichen Entkalkung auffordert oder eine solche startet, sofern die Auswerte-/Steuereinrichtung (9) aus den für die ordnungsgemäße Entkalkung relevanten Parametern erkennt, dass die routinemäßige Entkalkung nicht oder nicht ordnungsgemäß durchgeführt wurde.

## Beschreibung

Die vorliegende Erfindung betrifft ein Verfahren zur Überwachung einer Entkalkungsroutine bei einem Kaffeeautomaten. Die Erfindung betrifft außerdem ein zum Ausführen dieses Verfahrens ausgestaltetes Computerprogrammprodukt sowie einen Kaffeeautomaten mit einer Erfassungseinrichtung und einer Auswerte-/Steuereinrichtung zur Durchführung dieses Verfahrens.

Um Kaffeeautomaten langfristig fehlerfrei betreiben zu können, müssen diese turnusmäßig entkalkt werden. Der Abstand zwischen zwei einzelnen Entkalkungsvorgängen hängt dabei beispielsweise von einer Nutzungsintensität und/oder einer Wasserhärte ab. Hierzu werden Nutzer derartiger Kaffeeautomaten üblicherweise turnusmäßig aufgefordert, beispielsweise über eine entsprechende Anzeige an einem Display, oder aber der Kaffeeautomat startet einen derartigen Entkalkungsvorgang turnusmäßig selbsttätig. Um dabei eine ordnungsgemäße Entkalkung durchführen zu können, ist es erforderlich, dass beispielsweise ein hierfür geeignetes Entkalkungsmittel in der richtigen Dosierung und mit der richtigen Einwirkzeit gewählt wird. Ein unbefriedigendes Entkalkungsergebnis können beispielsweise Entkalkungstabletten minderer Qualität oder anderer Hersteller bewirken, wobei selbstverständlich auch ein Vergessen, eine Entkalkungstablette während des Entkalkungsvorgangs hinzuzufügen, zu einem mangelhaften Entkalkungsergebnis führen kann.

Ist der Entkalkungsvorgang jedoch durchgeführt, so beginnt der Turnus bis zum nächsten Entkalkungsvorgang wieder von neuem, ohne dass dabei geprüft wird, ob der durchgeführte Entkalkungsvorgang tatsächlich ein zufriedenstellendes Entkalkungsergebnis geliefert hat. Werden dabei mehrere aufeinanderfolgende Entkalkungsvorgänge nicht oder nicht ordnungsgemäß durchgeführt, so kann es zu einer zunehmenden Verkalkung und mittel- bis langfristig zu einer Beschädigung des Kaffeeautomaten kommen. Neben einer Beschädigung des Kaffeeautomaten kann es auch zu einer Beeinträchtigung des Geschmacks beim Herstellen von Kaffeegetränken kommen. Zudem zeigt ein verkalkter Kaffeeautomat einen deutlich höheren Energieverbrauch, was nicht nachhaltig ist.

Die vorliegende Erfindung beschäftigt sich daher mit dem Problem, ein Verfahren zur Überwachung einer Entkalkungsroutine bei einem Kaffeeautomaten bzw. generell bei einem Getränkeautomaten anzugeben, um eine langfristig einwandfreie Entkalkung und damit eine langfristig einwandfreie Funktion des Kaffeeautomaten zuverlässig gewährleisten zu können.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine routinemäßige Entkalkung zu überwachen und dabei einen Verkalkungsgrad bzw. ein damit zusammenhängendes Entkalkungsergebnis zu erfassen und gegebenenfalls zusätzliche Entkalkungsvorgänge anzubieten bzw. einzuleiten, wodurch ein Kaffeeautomat selbst bei einem Vergessen des Einlegens von Entkalkungstabletten oder einer falsch eingestellten Wasserhärte langfristig funktionsfähig gehalten werden kann. Bei dem erfindungsgemäßen Verfahren zur Überwachung einer Entkalkungsroutine bei einem Kaffeeautomaten wird turnusmäßig eine routinemäßige Entkalkung durchgeführt. Eine derartige routinemäßige Entkalkung (Entkalkungsroutine) kann dabei beispielsweise in Abhängigkeit von durchgeführten Brühvorgängen oder durch Festlegen einer vordefinierten Zeitspanne zwischen zwei Entkalkungsvorgängen definiert werden. Bei dem erfindungsgemäßen Verfahren werden nun zusätzlich für eine ordnungsgemäße Entkalkung relevante Parameter von einer Erfassungseinrichtung des Kaffeeautomaten erfasst und an eine Auswerte-/Steuereinrichtung übermittelt. Die für eine ordnungsgemäße Entkalkung relevanten Parameter korrelieren dabei mit einem Verkalkungsgrad. Die Auswerte-/Steuereinrichtung fordert nun einen Nutzer (m/w/d) des Kaffeeautomaten zu einer zusätzlichen Entkalkung auf oder startet eine solche automatisch, sofern die Auswerte-/Steuereinrichtung aus den für die ordnungsgemäße Entkalkung relevanten Parametern bzw. dem Verkalkungsgrad erkennt, dass die routinemäßige Entkalkung nicht oder zumindest nicht ordnungsgemäß durchgeführt wurde. Mit dem erfindungsgemäßen Verfahren lässt sich somit die Entkalkungsroutine einfach überwachen und zugleich ein Kaffeeerlebnis des Nutzers verbessern. Ein weiterer großer Vorteil des erfindungsgemäßen Verfahrens ist eine Verlängerung der Lebensdauer des Kaffeeautomaten sowie eine deutlich verbesserte Nachhaltigkeit, da eine starke Verkalkung, beispielsweise an einer Heizeinrichtung, einen höheren Energieverbrauch bedingt.

Die für eine ordnungsgemäße Entkalkung relevanten Parameter können beispielsweise eine Leistungsaufnahme einer Heizeinrichtung, eine Aufheizgeschwindigkeit einer Flüssigkeit, insbesondere Wasser, eine Durchflussmenge durch eine Wasserpumpe oder eine Leistungsaufnahme der Wasserpumpe beim Fördern von Wasser sein. Dauert beispielsweise das Aufheizen von Waser sehr lange und/oder benötigt eine hohe elektrische Leistung, so kann daraus geschlossen werden, dass beispielsweise ein Heizelement verkalkt ist. Auch kann eine erhöhte Leistungsaufnahme der Wasserpumpe bzw. eine geringere Fördermenge darauf hindeuten, dass ein Leitungsquerschnitt durch Kalkablagerungen eingeschränkt ist.

Bei einer vorteilhaften Weiterbildung des erfindungsgemäßen Verfahrens wird die zusätzliche Entkalkung mit zumindest einem der nachfolgenden zusätzlichen Parameter durchgeführt: Einer geringeren, gleichen oder höheren Menge an Entkalkungsmittel, d. h. einer geringeren, gleichen oder höheren Konzentration des Entkalkungsmittels, einer kürzeren, gleichen oder längeren Einwirkzeit bzw. einer geringeren, gleichen oder höheren Temperatur. Selbstverständlich sind auch Mischformen, wie eine höhere Menge an Entkalkungsmittel bei gleichzeitig größerer Menge an Wasser und dadurch gleicher Konzentration denkbar. Auch unterschiedliche Durchflusszeiten und/oder Pausezeiten sind denkbar.

Führt die routinemäßige Entkalkung nicht zu einer ordnungsgemäßen Entkalkung des Kaffeeautomaten, so kann die zusätzliche Entkalkung mit einer höheren Menge bzw. einer höheren Konzentration an Entkalkungsmittel durchgeführt werden, wodurch eine zuverlässige Entkalkung und dadurch ein langfristig einwandfreier Betrieb des Kaffeeautomaten gewährleistet werden können. Generell ist zusätzlich oder alternativ auch eine längere Einwirkzeit des Entkalkungsmittels denkbar, wodurch ebenfalls eine verbesserte Entkalkung gewährleistet werden kann. Auch das Durchführen der zusätzlichen Entkalkung mit einer höheren Temperatur unterstützt einen Entkalkungserfolg, wodurch die zusätzliche Entkalkung in geringerer Zeit, jedoch gleichzeitig mit zufriedenstellendem Entkalkungsergebnis durchgeführt werden kann.

Bei einer weiteren vorteilhaften Ausführungsform des erfindungsgemäßen Verfahrens fordert die Auswerte-/Steuereinrichtung einen Nutzer des Kaffeeautomaten unabhängig von der Entkalkungsroutine zu einer zusätzlichen Entkalkung auf oder startet eine solche automatisch. Konkret bedeutet dies, dass in die Entkalkungsroutine nicht eingegriffen wird, sodass deren turnusmäßige Entkalkungsvorgänge weder verschoben noch unterbrochen werden, sofern beispielsweise eine zusätzliche Entkalkung zwischendurch durchgeführt wird. Dies bietet den großen Vorteil, dass die zusätzliche Entkalkung tatsächlich als zusätzlicher Entkalkungsvorgang durchgeführt wird, der das Entkalkungsergebnis unabhängig von der Entkalkungsroutine verbessert. Selbstverständlich ist auch denkbar, dass durch die zusätzliche Entkalkung in die turnusmäßige Entkalkungsroutine eingegriffen und diese verändert bzw. angepasst wird.

Bei einer besonders bevorzugten Ausführungsform zeichnet die Auswerte-/Steuereinrichtung eine Entwicklung einer Verkalkung anhand zumindest eines der nachfolgenden Parameter auf: Einer Fördermenge einer Wasserpumpe, einer Leistungsaufnahme einer Heizeinrichtung bzw. einer Auslasstemperatur und/oder einer Oberflächentemperatur der Heizeinrichtung. Eine zunehmende Verkalkung kann beispielsweise eine Fördermenge einer Wasserpumpe reduzieren, da der zur Wasserförderung zur Verfügung stehende freie Leitungsquerschnitt durch Kalkablagerungen reduziert ist. Auch eine Zunahme einer Spannung bzw. einer Leistungsaufnahme einer Wasserpumpe kann darauf hindeuten, dass diese aufgrund des verkalkten und damit engeren Leitungsquerschnitts mehr Strom verbraucht. Auch eine Auslasstemperatur eines herzustellenden Kaffeegetränks kann indirekt auf einen Verkalkungszustand einer Heizeinrichtung hindeuten, da eine Heizleistung und damit ein Wärmeübertrag der Heizeinrichtung bzw. einer Heizfläche auf das zu erwärmende Medium, hier Wasser, mit zunehmender Verkalkung nachlässt, da Kalk eine Art Isolierschicht um das jeweilige Heizelement bildet. Ist die Heizeinrichtung temperaturgesteuert, so kann eine Verkalkung auch mit einer höheren Leistungsaufnahme der Heizeinrichtung einhergehen und darüber erfasst werden. Selbstverständlich ist dabei auch eine Kombination einzelner solcher Parameter zur Erfassung und Aufzeichnung der Entwicklung der Verkalkung denkbar.

Bei einer besonders bevorzugten Ausführungsform des erfindungsgemäßen Verfahrens erfasst die Erfassungseinrichtung einen Temperaturanstieg über die Zeit und übermittelt diesen an die Auswerte-/Steuereinrichtung, die aus dem Temperaturanstieg über die Zeit, d. h. aus diesem zeitlichen Temperaturanstieg und einer Heizleistung/Leistungsaufnahme der Heizeinrichtung einen für eine ordnungsgemäße Entkalkung relevanten Parameter ermittelt. Beispielsweise kann eine Anstiegszeit an einzelnen Temperatursensoren zwischen 10 % und 90 % in Korrelation mit einer Heizleistung/Leistungsaufnahme der Heizeinrichtung erfasst werden. Ein sich verlangsamender Temperaturanstieg über die Zeit bildet dabei einen Indikator für eine zunehmende Verkalkung, ebenso wie auch ein reduziertes Abkühlen der Heizeinrichtung nach Beendigung des Heizvorgangs. Unterschreitet dabei der Temperaturanstieg über die Zeit einen bestimmten vordefinierten Grenzwert, so kann die Auswerte-/Steuereinrichtung auf eine durch die routinemäßige Entkalkung nicht entfernte Verkalkung, das heißt einen erhöhten Verkalkungsgrad schließen und den Nutzer zu einer zusätzlichen Entkalkung auffordern bzw. eine derartige starten.

Vorteilhafterweise fordert die Auswerte-/Steuereinrichtung den Nutzer des Kaffeeautomaten zu einer Anpassung der Einstellung der Wasserhärte auf oder führt diese Anpassung durch, sofern die Auswerte-/Steuereinrichtung aus den für die ordnungsgemäße Entkalkung relevanten Parametern bzw. dem ermittelten Verkalkungsgrad erkennt, dass die routinemäßige Entkalkung nicht oder nicht ordnungsgemäß durchgeführt wurde. Unterschiedliche Wasserhärten führen bekannter Weise zu einer unterschiedlich schnellen und starken Verkalkung, insbesondere einer Heizeinrichtung, wodurch eine Adaption der Wasserhärte in Abhängigkeit der durchzuführenden zusätzlichen Entkalkungsvorgänge nicht nur eine Reduzierung des Energieverbrauchs des Kaffeeautomaten bewirkt, sondern auch die Anzahl der durchzuführenden zusätzlichen Entkalkungsvorgänge minimiert. Über eine automatische Anpassung der Wasserhärte kann auch die Entkalkungsroutine automatisch angepasst werden, so dass bei einer Erhöhung der Wasserhärte beispielsweise ein Zeitabstand zwischen zwei routinemäßigen Entkalkungsvorgängen entsprechend automatisch verkürzt wird.

Vorteilhafterweise fordert die Auswerte-/Steuereinrichtung den Nutzer des Kaffeeautomaten zu einem Ausbau eines Wasserfilters auf, sofern die Auswerte-/Steuereinrichtung aus den für die ordnungsgemäße Entkalkung relevanten Parametern erkennt, dass die routinemäßige Entkalkung nicht oder nicht ordnungsgemäß durchgeführt wurde. Das Entfernen des Wasserfilters ist dabei wichtig, um beispielsweise zu verhindern, dass Entkalkungsmittel in den Wasserfilter gelangt und anschließend nur unvollständig wieder entfernt/ausgespült werden kann. Wird das Wasserfilter beim Entkalkungsvorgang nicht entfernt, so besteht das Risiko, dass die Entkalkung nicht oder zumindest nicht zufriedenstellend durchgeführt wird bzw. dass Entkalkungsmittel im Wasserfilter verbleibt.

Bei einer weiteren besonders bevorzugten Ausführungsform des erfindungsgemäßen Verfahrens fordert die Auswerte-/Steuereinrichtung den Nutzer des Kaffeeautomaten zu einer zusätzlichen Entkalkung lediglich bestimmter Bauteile auf oder startet eine solche, sofern die Auswerte-/Steuereinrichtung aus den für die ordnungsgemäße Entkalkung relevanten Parametern erkennt, dass die routinemäßige Entkalkung dieser bestimmten Bauteile nicht oder nicht ordnungsgemäß durchgeführt wurde. Die Auswerte-/Steuereinrichtung kann dabei sämtliche Herstellungsvorgänge von Getränken überwachen, sodass beispielsweise eine Entkalkung einer Milchschaumstrecke nicht durchgeführt wird, sofern die Auswerte-/Steuereinrichtung detektiert, dass in dem zu entkalkenden Kaffeeautomaten ausschließlich schwarzer Kaffee aufgebrüht wurde. Hierdurch kann eine besonders nachhaltige, schnelle und zudem schonende Entkalkung des Kaffeeautomaten erfolgen.

Die vorliegende Erfindung beruht weiter auf dem allgemeinen Gedanken, dass das Verfahren mittels eines entsprechend ausgestalteten Computerprogrammprodukts ausgeführt wird, welches durch ein Computersystem auslesbare Anweisungen enthält. Dabei kann das Computerprogrammsystem zumindest teilweise Bestandteil der Auswerte-/Steuereinrichtung sein und einen Speicher aufweisen, auf welchem das Computerprogrammprodukt gespeichert ist. Generell kann dabei das Computerprogrammprodukt im Kaffeeautomaten ausgeführt werden, wobei es auch denkbar ist, dass das Computerprogrammprodukt zumindest teilweise außerhalb des Kaffeeautomaten, insbesondere in einer Cloud, ausgeführt wird. Hierzu kann der Kaffeeautomat beispielsweise ein WLAN-Modul aufweisen, über welches der Kaffeeautomat und dessen Computersystem mit dem Internet verbunden sind.

Die vorliegende Erfindung beruht weiter auf dem allgemeinen Gedanken, einen Kaffeeautomaten mit einer Erfassungseinrichtung und einer Auswerte-/Steuereinrichtung zur Durchführung dieses Verfahrens entsprechend den vorherigen Absätzen anzugeben. Der Kaffeeautomat kann zudem einen Wassertank, einen Durchflussmesser, eine Wasserpumpe, eine Heizeinrichtung, ein Ventil sowie eine Brüheinheit mit einem Getränkeauslass aufweisen. Dabei kann der Kaffeeautomat ein Computersystem enthalten, welches aus einem Computerprogrammprodukt Anweisungen derart ausliest, dass das Computersystem beim Ausführen des Computerprogrammprodukts das Verfahren entsprechend den vorherigen Absätzen ausführt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in den Zeichnungen anders dargestellt ist.

Ein bevorzugtes Ausführungsbeispiel der Erfindung ist in der Zeichnung dargestellt und wird in der nachfolgenden Beschreibung näher erläutert.

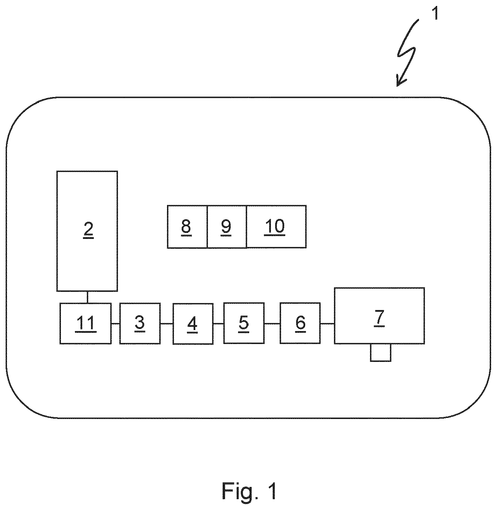

Die einzige Figur 1 zeigt einen erfindungsgemäßen Kaffeeautomaten.

Entsprechend der Figur 1 weist ein erfindungsgemäßer Kaffeeautomat 1 einen Wassertank 2, einen Durchflussmesser 3, eine Wasserpumpe 4, eine Heizeinrichtung 5, ein Ventil 6 sowie eine Brüheinheit 7 mit einem Getränkeauslass auf. Des Weiteren besitzt der erfindungsgemäße Kaffeeautomat 1 eine Erfassungseinrichtung 8 sowie eine Auswerte-/Steuereinrichtung 9, wobei über die Erfassungseinrichtung 8 relevante Parameter für eine ordnungsgemäße Entkalkung, das heißt indirekt ein Verkalkungsgrad, erfassbar sind. Die Erfassungseinrichtung 8 ist dabei datenübertragend mit der Auswerte-/Steuereinrichtung 9 verbunden. Darüber hinaus kann der Kaffeeautomat 1 ein Computersystem 10 aufweisen, welches Anweisungen aus einem Computerprogrammprodukt auslesen kann und beim Ausführen des Computerprogrammprodukts ein erfindungsgemäßes Verfahren zur Überwachung einer Entkalkungsroutine durchführt. Das Computerprogrammprodukt ist dabei beispielsweise auf einem Speicher des Computersystems 10 oder in eine Cloud gespeichert.

Bei dem erfindungsgemäßen Verfahren zur Überwachung der Entkalkungsroutine wird zunächst turnusmäßig eine routinemäßige Entkalkung durchgeführt. Dies kann beispielsweise innerhalb vordefinierter Zeitabstände oder nach einer vordefinierten Anzahl an durchgeführten Brühvorgängen erfolgen. Über die Erfassungseinrichtung 8 werden nun die für eine ordnungsgemäße Entkalkung relevanten Parameter, wie beispielsweise eine Fördermenge der Wasserpumpe 4, eine Spannung, eine Auslasstemperatur eines zur Brühung verwendeten Wassers, ein Temperaturanstieg über die Zeit an der Heizeinrichtung 5, eine Leistungsaufnahme der Heizeinrichtung 5 und/oder der Wasserpumpe 4 erfasst und an die Auswerte-/Steuereinrichtung 9 übermittelt werden. Die Auswerte-/Steuereinrichtung 9 fordert einen Nutzer des Kaffeeautomaten 1 nur dann zu einer zusätzlichen Entkalkung auf oder startet eine solche automatisch, sofern die Auswerte-/Steuereinrichtung 9 aus den für die ordnungsgemäße Entkalkung relevanten Parametern erkennt, dass die routinemäßige Entkalkung nicht oder nicht ordnungsgemäß durchgeführt wurde und ein Verkalkungsgrad zu hoch ist.

Eine nicht oder nicht ordnungsgemäß durchgeführte Entkalkungsroutine, d. h. routinemäßige Entkalkung, kann langfristig zu einer Schädigung des Kaffeeautomaten 1 und insbesondere zu einem Beeinträchtigen eines Kaffeegeschmacks und einer Verkürzung der Lebensdauer des Kaffeeautomaten 1 führen, ebenso wie zu einer Reduzierung der Nachhaltigkeit, da stark verkalkte Geräte, insbesondere stark verkalkte Heizeinrichtungen 5 einen deutlich höheren Energieverbrauch aufweisen.

Bei dem erfindungsgemäßen Verfahren kann die zusätzliche Entkalkung mit zumindest einem der nachfolgenden zusätzlichen Parameter durchgeführt werden: Einer geringeren, gleichen oder höheren Menge an Entkalkungsmittel, einer kürzeren, gleichen oder längeren Einwirkzeit und/oder einer geringeren, gleichen oder höheren Temperatur.

Selbstverständlich sind auch Mischformen, wie eine höhere Menge an Entkalkungsmittel bei gleichzeitig größerer Menge an Wasser und dadurch gleicher Konzentration denkbar. Auch unterschiedliche Durchflusszeiten und/oder Pausezeiten sind denkbar. Alternativ ist selbstverständlich auch die außerplanmäßige zusätzliche Durchführung eines routinemäßigen Entkalkungsvorgangs denkbar. Hierdurch kann eine nochmals verbesserte Entkalkung des Kaffeeautomaten 1 erreicht werden, wobei diese zusätzliche und parameterbasierte Entkalkung unabhängig von der eigentlichen Entkalkungsroutine ablaufen kann. Konkret bedeutet dies, dass sofern ein zusätzlicher Entkalkungsvorgang durchgeführt wird, die bislang geltende Entkalkungsroutine unabhängig von diesem zusätzlichen Entkalkungsvorgang fortgeführt wird. Hierdurch kann eine lediglich bedarfsabhängige zusätzliche Entkalkung vorgenommen werden, ohne dabei die eigentliche Entkalkungsroutine zu beeinflussen. Alternativ ist auch denkbar, dass durch die zusätzliche Entkalkung in die turnusmäßige Entkalkungsroutine eingegriffen und diese verändert bzw. angepasst wird.

Durch eine höhere Menge an Entkalkungsmittel und eine damit höhere Konzentration einer Entkalkungslösung kann ebenso wie durch eine längere Einwirkzeit des Entkalkungsmittels bzw. eine höhere Temperatur oder auch nur das nochmalige Durchführen eines routinemäßigen Entkalkungsvorgangs ein verbessertes Entkalkungsergebnis erzielt werden.

Die Erfassungseinrichtung 8 kann einen Temperaturanstieg über die Zeit erfassen und an die Auswerte-/Steuereinrichtung 9 übermittelt, die aus diesem zeitlichen Temperaturanstieg und einer Heizleistung (z.B. Leistungsaufnahme der Heizeinrichtung 5) einen für eine ordnungsgemäße Entkalkung relevanten Parameter ermittelt. Konkret bedeutet dies, dass bei einem langsamen Temperaturanstieg auf eine zunehmende Verkalkung der Heizeinrichtung 5 zu schließen ist, da sich Kalk bevorzugt an Heizflächen bzw. Heizstäben ablagert und auf diesen eine Isolierschicht bildet. Eine derartige Isolierschicht aus Kalk reduziert den Temperaturanstieg ebenso wie den Temperaturabfall nach dem Abschalten der Heizeinrichtung 5 und sollte aus Nachhaltigkeitsgründen unbedingt vermieden werden.

Bei einer besonders bevorzugten Ausführungsform des erfindungsgemäßen Verfahrens fordert die Auswerte-/Steuereinrichtung 9 den Nutzer des Kaffeeautomaten 1 zu einer Anpassung der Einstellung der Wasserhärte auf oder führt eine derartige Anpassung der Wasserhärte selbsttätig durch, sofern die Auswerte-/Steuereinrichtung 9 aus den für die ordnungsgemäße Entkalkung relevanten Parametern erkennt, dass die routinemäßige Entkalkung nicht oder nicht ordnungsgemäß durchgeführt wurde bzw. wird. Härteres Wasser, d. h. also mit einem höheren Anteil an Kalzium bzw. Magnesium, erfordert deshalb eine häufigere Entkalkung, sodass durch eine Anpassung der Einstellung der Wasserhärte durch die Auswerte-/Steuereinrichtung 9 die routinemäßige Entkalkung angepasst werden kann. Wird die Wasserhärte automatisch erhöht, so werden die routinemäßigen Entkalkungsvorgänge in kürzerer Zeit durchgeführt, wodurch beispielsweise bereits ein zufriedenstellendes Entkalkungsergebnis erzielbar ist, sodass ohne zusätzliche Entkalkung ausgekommen werden kann.

Auch kann die Auswerte-/Steuereinrichtung 9 den Nutzer des Kaffeeautomaten 1 zu einem Ausbau eines Wasserfilters 11 auffordern, sofern die Auswerte-/Steuereinrichtung 9 aus den für die ordnungsgemäße Entkalkung relevanten Parametern erkennt, dass die routinemäßige Entkalkung nicht oder nicht ordnungsgemäß durchgeführt wurde. Der Ausbau des Wasserfilters 11 während eines Entkalkungsvorgangs ist dabei unbedingt erforderlich, um beispielsweise zu verhindern, dass Entkalkungsmittel in das Wasserfilter 11 gelangt und anschließend nur unvollständig wieder entfernt/ausgespült werden kann. Wird das Wasserfilter 11 beim Entkalkungsvorgang nicht entfernt, so besteht das Risiko, dass die Entkalkung nicht oder zumindest nicht zufriedenstellend durchgeführt wird bzw. dass Entkalkungsmittel im Wasserfilter 11 verbleibt.

Wird über den Kaffeeautomaten 1 beispielsweise lediglich schwarzer Kaffee ausgegeben, so kann dies über die Erfassungseinrichtung 8 ebenfalls ermittelt werden, woraufhin die Auswerte-/Steuereinrichtung 9 den Nutzer des Kaffeeautomaten 1 zu einer zusätzlichen Entkalkung lediglich bestimmter Bauteile auffordert oder eine solche startet, sofern die Auswerte-/Steuereinrichtung 9 aus den für die ordnungsgemäße Entkalkung relevanten Parametern erkennt, dass die routinemäßige Entkalkung dieser bestimmten Bauteile nicht oder nicht ordnungsgemäß durchgeführt wurde. Bei der Ausgabe ausschließlich schwarzen Kaffees, kann auf eine Entkalkung von Milchleitungen bzw. einer Milchschaumstrecke verzichtet werden, da diese nicht benutzt wurden/wurde und dadurch auch nicht oder zumindest nicht wesentlich verkalken kann.

Mit dem erfindungsgemäßen Verfahren, dem erfindungsgemäßen Computerprogrammprodukt und dem erfindungsgemäßen Kaffeeautomaten 1 lässt sich so eine deutlich verbesserte und zuverlässige Entkalkung erreichen, wodurch sich ein Kaffeeerlebnis des Nutzers verbessert, die Lebensdauer des Kaffeeautomaten 1 verlängert und zugleich eine verbesserte Nachhaltigkeit erzielt wird, da beispielsweise eine verkalkte Heizeinrichtung 5 einen deutlich höheren Energieverbrauch zum Aufheizen von Wasser aufweist. Auch kann mit dem erfindungsgemäßen Kaffeeautomaten 1 ein defekter Temperatursensor erkannt werden, sofern beispielsweise die Erfassungseinrichtung 8 den Temperaturanstieg über die Zeit erfasst und sich hier keine Änderung einstellt.

### Bezugszeichen

- 1: Kaffeeautomat
- 2: Wassertank
- 3: Durchflussmesser
- 4: Wasserpumpe
- 5: Heizeinrichtung
- 6: Ventil
- 7: Brüheinheit
- 8: Erfassungseinrichtung
- 9: Auswerte-/Steuereinrichtung
- 10: Computersystem
- 11: Wasserfilter

## Patentansprüche

1. Verfahren zur Überwachung einer Entkalkungsroutine bei einem Kaffeeautomaten (1), bei dem,
- eine routinemäßige Entkalkung durchgeführt wird,
- zusätzlich für eine ordnungsgemäße Entkalkung relevante Parameter von einer Erfassungseinrichtung (8) erfasst und an eine Auswerte-/Steuereinrichtung (9) übermittelt werden,
- die Auswerte-/Steuereinrichtung (9) einen Nutzer des Kaffeeautomaten (1) zu einer zusätzlichen Entkalkung auffordert oder eine solche startet, sofern die Auswerte-/Steuereinrichtung (9) aus den für die ordnungsgemäße Entkalkung relevanten Parametern erkennt, dass die routinemäßige Entkalkung nicht oder nicht ordnungsgemäß durchgeführt wurde.

2. Verfahren nach Anspruch 1,
**dadurch gekennzeichnet,**
**dass** die zusätzliche Entkalkung mit zumindest einem der nachfolgenden zusätzlichen Parameter durchgeführt wird,
- einer geringeren, gleichen oder höheren Menge an Entkalkungsmittel,
- einer kürzeren, gleichen oder längeren Einwirkzeit,
- einer geringeren, gleichen oder höheren Temperatur.

3. Verfahren nach Anspruch 1 oder 2,
**dadurch gekennzeichnet,**
**dass** die Auswerte-/Steuereinrichtung (9) einen Nutzer des Kaffeeautomaten (1) unabhängig von der Entkalkungsroutine zu einer zusätzlichen Entkalkung auffordert oder eine solche startet.

4. Verfahren nach einem der Ansprüche 1 bis 3,
**dadurch gekennzeichnet,**
**dass** die Auswerte-/Steuereinrichtung (1) eine Entwicklung einer Verkalkung anhand zumindest eines der nachfolgenden Parameter aufzeichnet, Fördermenge einer Wasserpumpe (4), Spannung, eine Auslasstemperatur eines zur Brühung verwendeten Wassers, eine Oberflächentemperatur einer Heizeirnichtung.

5. Verfahren nach einem der vorhergehenden Ansprüche,
**dadurch gekennzeichnet,**
**dass** die Erfassungseinrichtung (8) einen Temperaturanstieg von zu erwärmender Flüssigkeit über die Zeit erfasst und an die Auswerte-/Steuereinrichtung (9) übermittelt, die aus diesem zeitlichen Temperaturanstieg und einer Leistungsaufnahme einer Heizeinrichtung (5) einen für eine ordnungsgemäße Entkalkung relevanten Parameter ermittelt.

6. Verfahren nach einem der vorhergehenden Ansprüche,
**dadurch gekennzeichnet,**
**dass** die Auswerte-/Steuereinrichtung (9) den Nutzer des Kaffeeautomaten (1) zu einer Anpassung der Wasserhärte auffordert oder diese automatisch anpasst, sofern die Auswerte-/Steuereinrichtung (9) aus den für die ordnungsgemäße Entkalkung relevanten Parametern erkennt, dass die routinemäßige Entkalkung nicht oder nicht ordnungsgemäß durchgeführt wurde.

7. Verfahren nach einem der vorhergehenden Ansprüche,
**dadurch gekennzeichnet,**
**dass** die Auswerte-/Steuereinrichtung (9) den Nutzer des Kaffeeautomaten (1) zu einem Ausbau eines Wasserfilters (11) auffordert, sofern die Auswerte-/Steuereinrichtung (9) aus den für die ordnungsgemäße Entkalkung relevanten Parametern erkennt, dass die routinemäßige Entkalkung nicht oder nicht ordnungsgemäß durchgeführt wurde.

8. Verfahren nach einem der vorhergehenden Ansprüche,
**dadurch gekennzeichnet,**
**dass** die Auswerte-/Steuereinrichtung (9) den Nutzer des Kaffeeautomaten (1) zu einer zusätzlichen Entkalkung lediglich bestimmter Bauteile auffordert oder eine solche startet, sofern die Auswerte-/Steuereinrichtung (9) aus den für die ordnungsgemäße Entkalkung relevanten Parametern erkennt, dass die routinemäßige Entkalkung dieser bestimmten Bauteile nicht oder nicht ordnungsgemäß durchgeführt wurde.

9. Computerprogrammprodukt, umfassend Befehle, die bei der Ausführung des Programms durch ein Computersystem (10) dieses veranlassen, das Verfahren nach einem der Ansprüche 1 bis 8 auszuführen.

10. Kaffeeautomat (1) mit einem Wassertank (2), einem Durchflussmesser (3), einer Wasserpumpe (4), einer Heizeinrichtung (5), einem Ventil (6), einer Brüheinheit (7), einer Erfassungseinrichtung (8), einer Auswerte-/Steuereinrichtung (9) zur Durchführung des Verfahren nach einem der vorhergehenden Ansprüche und einem Wasserfilter (11).
